# EUROPEAN PATENT APPLICATION

(11) **EP 3 992 873 A1**
(43) Date of publication of application: **04.05.2022**
(21) Application number: 20306306.0
(22) Date of filing: 30.10.2020
(51) Int. Cl.: G06Q 10/00

(54) **DEVICE-ENABLED SECURE LEDGER**

(71) Applicant: Hewlett-Packard Development Company, L.P., Spring TX 77389 (US)
(72) Inventor: Bouraoui, Samir, 38053 Grenoble Isere (FR); Balinsky, Helen, Bristol, Bristol BS1 6NP (GB); Daney de Marcillac, Patrick Jacques Andre Marie, 38053 Grenoble Isere (FR)
(74) Representative: Bryers LLP

(57) **Abstract**

A method and system are disclosed. The method comprises event identification data on a device identifying an occurrence of an event in the device lifecycle, generating a secure ledger transaction request on the basis of the event identification data and communicating the transaction request from the device to store a transaction record for the event in the secure ledger.

## Description

### BACKGROUND

Throughout the course of its lifecycle an electronic device will pass through a complex infrastructure involving a large number of parties. A device may be built in one country and shipped to the end-user through one or more couriers and suppliers. The infrastructure for handling a device as it passes through each stage of the device lifecycle is also operated and controlled by multiple separate parties. The task of device lifecycle management is supported by paper trails and audit logging as the device passes through each stage on its way to the end-consumer or another stage of its lifecycle.

### BRIEF DESCRIPTION OF THE DRAWINGS

Figure 1 is a schematic diagram showing an apparatus for recording data to a secure ledger, according to an example.
Figure 2 is a schematic diagram showing a device lifecycle according to an example.
Figure 3 is a block diagram showing a method for certifying record data on a device, according to an example.
Figure 4 is a block diagram of a method for recording data to a secure ledger, according to an example.
Figure 5 is a schematic diagram showing a processor and memory, according to an example.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

Presently, the infrastructure for handling a device as it passes through each stage of the device lifecycle is operated and controlled by multiple separate parties. Processes for tracking the stages of a device lifecycle are often manual processes that are prone to human error. These processes may involve complex paper trails where records of transactions are printed, hand-written and scanned before being confirmed between the relevant parties. Such processes are costly and frustrating for providers and the customers they serve.

Furthermore, dispute resolution in systems reliant on these processes can be very time consuming and costly. The likelihood of disputes also increases when transactions are recorded and paid for in paperwork in multi-lingual and multi-currency environments. The increased lack of precision in asset management may also lead to a loss of inventory.

In some cases, a party provides their own reference system which other parties may connect to and utilize. Unfortunately, establishing such a reference system is also a complex procedure. This is because the device lifecycle may involve interaction with multiple entities. Such a reference system relies on the co-operation between the other parties to agree and establish connections and reconciliation processes. This may be a highly complex task that requires parties to integrate their IT infrastructures. Once a customer has been through such an integration process with a vendor, the customer becomes tied to the vendor. This is unattractive to customers who may desire the choice and flexibility to change vendors based on changing business needs or market conditions.

In recent years, secure ledger or "blockchain" technology has become prevalent. Secure ledgers are deployed in a range of contexts to provide guarantees that certain processes have properly been executed and that tasks have been carried out according to a well-defined process.

A secure ledger may be implemented as follows: the previous entry in the ledger is hashed using a secure cryptographic hash function and is used as an input to the next block in a chain. Further data may be input into the next block such as a record that a transaction has taken place. This creates a secure-by-design process where the integrity of any point of the chain can be verified by recomputing hash values on inputs and checking the recomputed hash values against the ledger.

Secure ledgers may be stored in a decentralized fashion across multiple nodes. For example, the ledger may be stored across a peer-to-peer network where nodes hold their own copy of the ledger. In that case, the verification of a transaction may occur by recomputing values at nodes and reaching a consensus.

Using secure ledgers, it is possible to execute whole protocols and maintain a verifiable record of each step of the protocol. For example, "smart contracts" allow the digital facilitation, verification and/or enforcement of the negotiation or performance of a contract. Smart contracts allow the performance of credible transactions without third parties such as legal entities being involved.

Ledger technology digitizes and simplifies many processes which would previously have involved trusted third-party verification to perform securely. Secure ledgers provide a higher degree of certainty for participants and provide greater security over trusted third-party models.

In the context of device lifecycle management, a secure ledger may be used to construct a verifiable record of events that have occurred in the device lifecycle. The methods and systems described herein provide an automated system using a secure ledger to record transactions between vendors and customers throughout the device lifecycle.

A client or program is installed on the device during a manufacturing process. The client can be installed in the OS as an application or under the OS, so it cannot be removed. In some cases, the client is persistent on the device so that a user of the device is unable to remove the client by removing or re-installing the OS on the device. In other examples, the device may be configured to stop working if the client is removed or tampered with by a user. The client is activated when the device is initially powered up. The client is then activated when an event occurs on the device during a stage of the device lifecycle. On activation the client creates a payload. The client certifies and transmits the payload to a remote server that stores the record of the interaction or event in a secure ledger.

When an Enterprise customer purchases a device, the device may be placed in a secure locker. Then an end-user customer may collect the device using an access credential provided by the enterprise. According to examples, the secure ledger client may run in the firmware of the device. When the device is placed in the locker for delivery to the end-user customer, the client records the presence of the device in the locker by securely reading and recording a unique locker identifier associated to the locker. The device client generates a Certificate of Arrival (CoA) and uploads the certificate to the secure ledger with both its own device identifier and the locker identifier. In some embodiment, a CoA is a secure ledger record, generated by a secure ledger client in a device, which is signed by device's private key. The CoA may also contain additional information.

In some cases, the device may also be powered on and connected to a local area network when placed in a secure locker. Once the device has been switched on and remotely accessed by the end-user customer, the client may record data to the secure ledger as a first Certificate of Usage (CoU) and subsequently on an on-going basis once picked up from the locker.

After a period of time the device may experience a fault or malfunction in which case the user may seek to have the device repaired. In some cases, the device is refurbished and passes to a new user. The client can record that the device has been repaired by transmitting a Certificate of Repair (CoR) to the secure ledger.

Secure ledger data may be used to automatically trigger invoices based on terms agreed between various vendors involved in the manufacturing, servicing and recycling of devices throughout the device lifecycle.

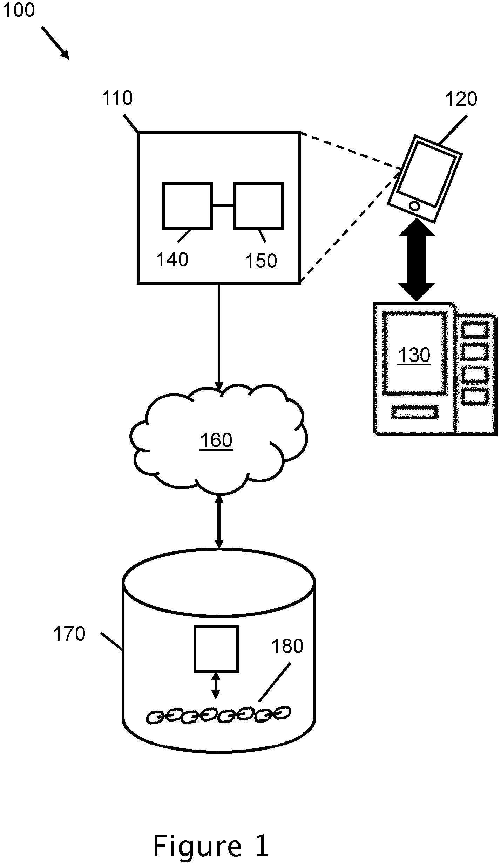

Figure 1 is a simplified schematic diagram 100 showing an apparatus 110 for recording data to a secure ledger, according to an example. The apparatus 110 may be implemented as software client within a device 120. The device 120 may be any electronic device such as a consumer electronics device or similar. The device lifecycle may comprise the period of time from the initial manufacture of the device 120 to the disposal or recycling of the device 120. An occurrence of an event in the device lifecycle may refer to a point in time in which an event occurs in the device lifecycle. This may be an event on the device 120 such as the first time the device 120 is switched on. Alternatively, an event may be an external event in which the device 120 participates, such as the delivery of the device 120 from a courier to a customer. The device may be made aware of an external event, by, for example, recognizing a beacon in the vicinity, or be connected to an external device and notifying an identifier of the external device.

The device 120 may interact with and thus be aware of an infrastructure component 130. The infrastructure component 130 may be, for example, a secure locker in which the device 120 is deposited when it is delivered to a customer. In another example, the infrastructure component 130 may be part of a production line on the manufacturing floor of a device manufacturer.

In Figure 1 the apparatus 110 comprises a validation module 140 and a memory 150. The validation module 140 may be a software component that executes in the device 120. The memory 150 may be a region of memory of the device 120. The memory 150 may be a read-only memory. For example, the apparatus 110 may be implemented as firmware in the device 120.

In examples, the validation module 140 may be implemented at a level below, or separate from an operating system that controls the device 120. For example, in one case, the validation module 140 is implemented as instructions in software in the Basic Input/Output System (BIOS) of the device 120. In this manner the validation module 140 and data stored on the validation module such as a private key, may be stored securely and, for example, logically separated from or inaccessible to the operating system of the device 120.

The apparatus 110 is in communication with a network 160. According to examples, the network 160 may be a wide area network such as the internet or a local area network (LAN). The network may be a mobile communications network or similar. In some cases, the connection of the apparatus 110 to the network 160 may be intermittent. In that case, the validation module 140 may be arranged to determine when a connection is available and to communicate with other entities on the network 160 on the basis of the determination.

In Figure 1, the apparatus 110 communicates with a remote server 170 across the network 160. The remote server 170 provides access to a secure ledger 180. The secure ledger 180 comprises a trackable and auditable record of event occurrences on the device 110. This may include a record of the creation of the device 120, and all subsequent events which are recorded to the secure ledger 180 in the device lifecycle.

According to examples the secure ledger 180 may be implemented as a blockchain or a hash chain. Data that is stored in the secure ledger 180 is determined on the basis of previous data written to the ledger and further input data received from the apparatus 110. Subsequent ledger entries may be computed using, for example, a secure cryptographic hash function. This creates a secure and immutable record of ledger entries.

According to examples described herein, the memory 150 of the validation module 140 comprises instructions to implement a secure ledger client. The client may be activated when the device 120 determines an event has occurred. For example, if the infrastructure component 130 is a secure locker, the client may be activated when the device 120 is placed in the secure locker.

The validation module 140 is arranged to access record data on a device 120 identifying an occurrence of an event in the device lifecycle, the record data may comprise an identifier of the event and/or a timestamp. On activation the client creates a payload with the record data. The payload also comprises transaction request that certifies the record data. According to examples, the transaction request may comprise a cryptographically secure digital signature that is generated by digitally signing the record data using a private key associated to the device 120. According to examples, the private key may be a device identifier private key or derived from a device identifier private key.

The client transmits the payload from the apparatus 110 to the remote server 170 via the network 160 when a connection becomes available. The remote server 170 receives the transaction request to record the payload to the secure ledger 180. The remote server 170 validates the transaction request. The remote server 170 generates a transaction record and adds the record to the secure ledger as a new ledger entry to the secure ledger 180. According to examples, generating a new entry to the secure ledger 180 comprises computing a hash value by evaluating a hash function on the basis of the payload and previous entries on the secure ledger 180.

In some cases, the client may repeatedly attempt to communicate the payload to the remote server 170 until a confirmation of success is received. In some cases, the client may also cause the device 120 to restrict usage of the device 120 after a number of failed attempts to communicate with the remote server 170 or after an amount of time has elapsed without receiving confirmation that the payload has been received.

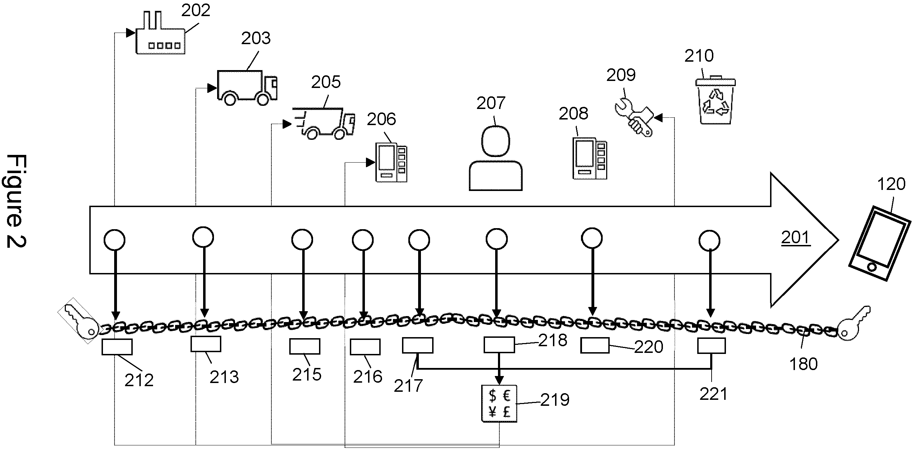

Figure 2 is a simplified schematic diagram showing a device lifecycle 200 for the device 120, according to an example. In Figure 2, different entities that interact with the device 120 are shown. The entities include a device manufacturer 202, a long-haul international delivery partner 203, a local logistic delivery partner 205, an enterprise customer 206, an end-user customer 207, a secure locker 208, a repairer 209 and a recycler 210.

The apparatus 110 shown in Figure 1 may be implemented in the device 120. Events in the device lifecycle 200 are represented as points on the arrow 201. For example, the point 211 may represent the inception of the device 120 during its manufacture.

At each stage of the device lifecycle 120, the apparatus 110 may detect, read or register a record of an event. The apparatus 110 automatically records the event occurrence to the secure ledger 180 in the manner described in relation to Figure 1.

For example, the apparatus 110 may be installed on the device 120 on the production line of the manufacturer 202 and post a payload 212 comprising a Certificate of Build (CoB) to the remote server 170 to be recorded in the secure ledger 180. When the device is received by the international delivery partner 203, the device 120 may identify a beacon associated to that partner or, if the partner powers the device 120, the device 120 may determine that a status has been entered by the partner into the device 120. The apparatus 110 may record a payload 213 comprising a Certificate of Delivery (CoD). The apparatus 110 may record data when the device 120 is passed to the local delivery partner 205. The apparatus may also send data 215 to the secure ledge 180 when the device 120 is received and/or delivered to the enterprise customer 206.

The enterprise customer 206 may receive the device 120 and store the device 120 in a smart locker enclosure on its premises. In some cases, the smart locker may contain a controlling device (not shown in Figure 2) having a pre-installed secure ledger client similar to that described in relation to the apparatus 110, in other cases the device may be connected to the locker which may contain a unique and secure identifier that the device will recognize.

According to examples, for a new device, the secure locker may cause the device to execute its so-called out of box experience which will trigger secured instructions set to activate apparatus 110. In examples, this may cause the apparatus 110, executing on the device 120 to post to the secure ledger 180. For example, the apparatus 110 may generate and send a Certificate of Acceptance 217 to the secure ledger 180. A Certificate of Usage 218 may be posted first from the locker and then on an ongoing basis after having been picked up by the user.

These certificates may be used to automatically trigger invoices, based on terms agreed between various vendors involved in the manufacturing, servicing and recycling of devices throughout the device lifecycle. A module 219 may be provided to trigger cascaded financial actions based on the various certificates. For example, payments may be completed from the manufacturer 202 to long haul deliverer 203, from the manufacturer 202 to the local delivery partner 205, to importer 204 to manufacturer 202. Financial actions may also be secure ledger records, e.g. tokens, loyalty points, or some other form of exchange that may be redeemable in goods or services or convertible to other currency.

In the case of a hardware failure that prevents the device 120 performing any communication, a Failure ID may be written into a black box running on the device 120. Another device or infrastructure component 208 equipped with a Radio-frequency identification (RFID) reader like a phone, locker or kiosk may read that FID and register a corresponding Certificate of Failure (CoF) on behalf of the device 120 into the secure ledger 180. Once repaired, the fully functional device may post a certificate of repair 221 to the secure ledger 180, This may trigger a further invoice. The CoF may also be certified by infrastructure interacting with a failed device. For example, an infrastructure component may detect the presence of a device using pressure sensors and cameras, however, no response is recorded from the device. In that case the infrastructure component may register device failure.

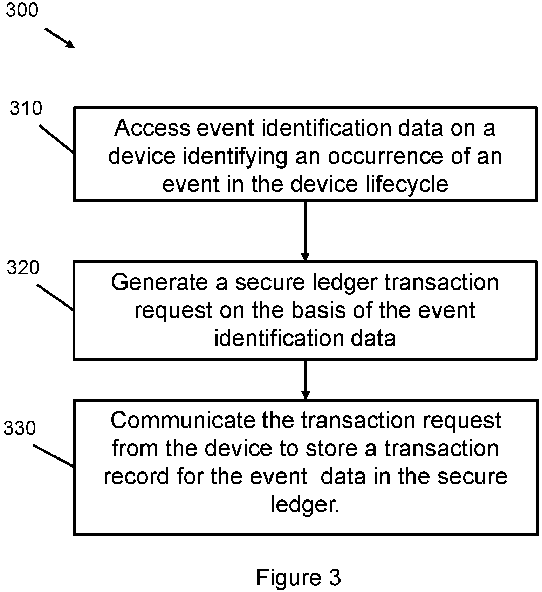

Figure 3 is a block diagram showing a method 300 method for recording an occurrence of an event in a device lifecycle to a secure ledger. The method 300 may be used in conjunction with the apparatus, methods and examples described herein. In particular, the method 300 may be implemented on the apparatus 110 shown in Figure 1.

At block 310, the method 300 comprises accessing event identification data identifying an occurrence of an event in the device lifecycle. The device may be any electronic device such as the device 120 shown in Figures 1 and 2.

At block 320, the method comprises generating a secure ledger transaction request on the basis of the event identification data. The block 320 may be implemented by the validation module 140 shown in Figure 1. According to examples, the transaction request comprises a cryptographically secure digital signature. The cryptographically secure digital signature may be generated using a private signing key associated to the device 120.

In some cases, generating a transaction request comprises the device interacting co-operatively with an infrastructure component. In some cases, co-operatively generating a transaction request comprises a client on the device generating first transaction request data, and the infrastructure component generating second transaction request data that is combined with the first data by either the device, the infrastructure component or another entity.

At block 330 the method 300 comprises communicating the transaction request to store a transaction record for the event in the secure ledger. The secure ledger comprises a ledger entry for each event occurrence that is on the device. In examples, communicating the request to store the comprises transmitting a payload to a remote server for storage in the secure ledger. The payload may comprise transaction request data and identifiers of an infrastructure component and/or the device.

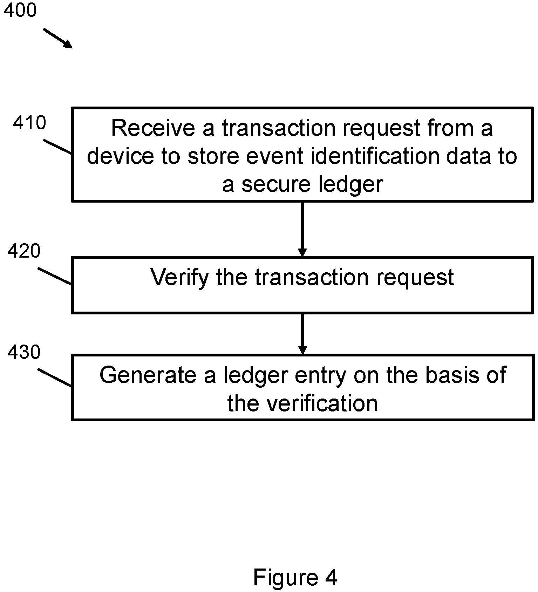

Figure 4 is a schematic diagram of a method 400, according to an example. The method 400 may be used in conjunction with the apparatus, methods and examples described herein. In particular, the method 400 may be implemented on the remote server 170 shown in Figure 1.

At block 410 the method 400 comprises receiving a transaction request to store event identification data to a secure ledger, the event identification data identifying an occurrence of an event during the device lifecycle. The secure ledger comprises a ledger entry for each event. According to examples, when the method 400 is implemented on the remote sever 170 in Figure 1, the request may be received from apparatus 110 following an occurrence of an event on the device 120. A smart contract may validate that a correct sequence of events occurred on a device.

At block 420, the method 400 comprises verifying the transaction request received with the request. In examples, verifying the transaction request comprises determining that the event occurrence corresponds to an interaction that is permitted according to a rule based on the secure ledger entries.

For example, the remote server 170 may determine whether for the transaction request relates to an event on the device 120 that is permitted according to a rule that a subsequent entry is to correspond to an event occurrence with a timestamp that is later than a timestamp of the previous event having an entry in the ledger. For example, in the context of Figure 2, it may be the case that the remote server 170 receives transaction request that the device 120 has been received by the user 207, subsequent to having already received transaction request for the event that the device 120 was received by the end-user 207, where the latter has a timestamp that is earlier than the timestamp of the most recent event. In that case, the remote server 170 may reject the transaction request for that interaction and notify the device 120 that the request was rejected.

At block 430 the method 400 comprises generating a ledger entry on the basis of the verification. In some cases, generating the ledger entry on the basis of the verification comprises generating the ledger entry as a function of previous ledger entries and transaction request data. For example, the ledger entry may be determined from the evaluation of secure cryptographic hash function on inputs comprising the most recent previous ledger entry and a record of the validation of a cryptographic signature received with the request.

According to examples the method 400 may further comprise receiving a request to execute the settlement of an invoice upon completion of the interaction, determining a status of the interaction on the basis of the secure ledger entries and executing the settlement on the basis of the determination. The settlement of the invoice may be a cash payment from a customer to a vendor, an issuance of an invoice from the vendor to the customer, or similar.

The method and systems described herein provide an efficient, auditable and robust system for device lifecycle management. The methods and systems provide tracking of a device throughout the device lifecycle regardless of ownership of the device or ownership of the various participating entities. The system described herein may autonomously execute contracts on behalf of vendors and customers that previously would have relied on complex paper trails. Such methods are prone to human error. The present method avoids these problems through the use of a secure ledger.

The methods and systems described herein may capture a rich set of device-related statuses throughout the course of the device lifecycle. Furthermore, the methods and systems described herein provide supply chain management where transactions between different parties are efficiently and automatically settled in an secure auditable manner, upon completion of a stage of the device lifecycle.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

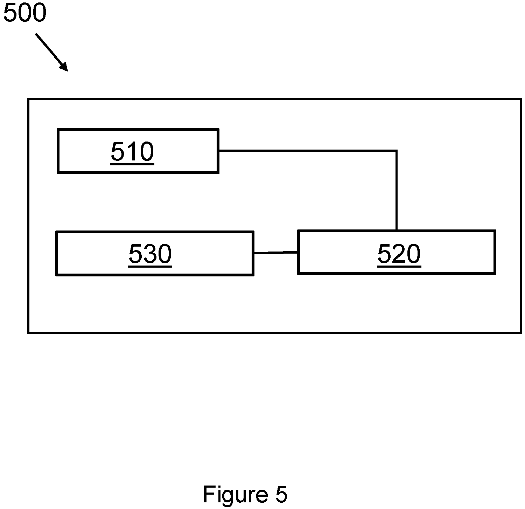

For example, the instructions may be provided on a non-transitory computer readable storage medium encoded with instructions, executable by a processor. Figure 5 shows an example of a processor 510 associated with a memory 520. The memory 520 comprises computer readable instructions 530 which are executable by the processor 510.

The instructions 530 cause the processor to receive record data identifying an occurrence of an event on a device, generate a digital signature validating the record data and send a request to a remote server to store the record data in a secure ledger, wherein the secure ledger comprises ledger entry data for each certified event occurrence on the device.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure. In particular, a feature or block from one example may be combined with or substituted by a feature/block of another example.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method for recording an occurrence of an event in a device lifecycle to a secure ledger, the method comprising:
accessing event identification data on a device identifying an occurrence of an event in the device lifecycle;
generating a secure ledger transaction request on the basis of the event identification data; and
communicating the transaction request from the device to store a transaction record for the event in the secure ledger.

2. The method of claim 1 wherein the transaction request comprises a cryptographically secure digital signature.

3. The method of claim 1 wherein communicating the request from the device comprises notifying a further device to communicate a request to store a transaction record of the event in the secure ledger on behalf of the device.

4. The method of claim 1, wherein communicating the request comprises determining an availability of a connection and communicating the request on the basis of the determination.

5. The method of claim 1, wherein the event comprises an activation of the device at a stage of the device lifecycle.

6. The method of claim 5, wherein the event identification data comprises a record of a test performed by the device to determine that the device is operational.

7. The method of claim 6, wherein generating the transaction request comprises accessing a cryptographic key stored securely on the device.

8. A method, comprising:
receiving a transaction request from a device to store event identification data to a secure ledger, the event identification data identifying an occurrence of an event in the device lifecycle;
verifying the transaction request; and
generating a ledger entry on the basis of the verification.
wherein the secure ledger comprises ledger entries for previous events in the device lifecycle.

9. The method of claim 8, wherein verifying the transaction request comprises determining, based on the secure ledger entries, that the event corresponds to an event that is permitted according to a rule.

10. The method of claim 8, comprising
receiving a request to settle an invoice upon completion of the event;
determining an event status on the basis of the secure ledger entries; and
executing the settlement of the invoice on the basis of the determination.

11. A computing device, comprising:
a memory and
a validation module communicatively coupled to the memory, the validation module to:
generate attestation data validating an event record for an event in the lifecycle of the computing device; and
transmit a transaction request from the computing device to store the attestation data in a secure ledger;
wherein the secure ledger comprises ledger entries for events in the lifecycle of the computing device.

12. The computing device of claim 11, wherein the event is a first boot of the computing device.

13. The computing device of claim 11 wherein the attestation data comprises a cryptographically secure digital signature.

14. A non-transitory computer readable medium comprising instructions which are executable by a processor, to cause the processor to:
receive record data identifying an occurrence of an event on a device;
generate a digital signature validating the record data; and
send a request to a remote server to store the record data in a secure ledger, wherein the secure ledger comprises ledger entry data for certified event occurrences on the device.

15. The non-transitory computer readable medium of claim 14, wherein the instructions are stored in a persistent memory of a computing device.
